(19)

Europäisches
Patentamt
European
Patent Office
Office européen
des brevets

(11) **EP 2 995 202 A1**

(12) **EUROPEAN PATENT APPLICATION**

(43) Date of publication:
**16.03.2016 Bulletin 2016/11**

(51) Int Cl.:
***A23K 10/40*** *(2016.01)* ***A23K 50/00*** *(2016.01)*

(21) Application number: **14178169.0**

(22) Date of filing: **23.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Interquim, S.A.**
**08173 Sant Cugat del Vallès (ES)**

(72) Inventors:
• **Crespo Montero, Francisco Javier**
**08950 ESPLUGUES DE LLOBREGAT (ES)**

• **Pérez Hernàndez, José Francisco**
**08225 TERRASSA (ES)**
• **Solà Oriol, David**
**08810 SANT PERE DE RIBES (ES)**

(74) Representative: **ZBM Patents - Zea, Barlocci & Markvardsen**
**Plaza Catalunya, 1**
**08002 Barcelona (ES)**

(54) **Animal feed additive**

(57)   The present invention refers to feed additive compositions for increasing feed intake and/or growth rate in animals. Said compositions comprise a *Stevia* extract and Neohesperidine didydrochalcone.

EP 2 995 202 A1

**Description**

**Field of the invention**

The present invention refers to feed additive compositions for increasing feed intake and/or growth rate in animals.

**Background of the invention**

The voluntary feed intake in farm animals is influenced by different factors such as the ingredients and their digestibility, palatability, forms of presentation (type of processing), the systems and modes used for rationing, water availability, etc.

Nowadays, farmers seek the optimum yield from their stock rearing, in particular maintaining or increasing consumption in order to maintain growth. In current intensive production conditions a weanling animal must quickly adapt to the change from suckling milk to eat compound feed, which reduces their voluntary feed intake and therefore their nutrient intake. This change causes a growth check and the manifestation of digestive pathologies. In the past, digestive pathologies were prevented by the use of growth promoting antibiotics and therapeutic doses of trace elements (Zn, Cu). The ban of antibiotic growth promoters in January of 2006 in the European Union and limitations on the use of Zn and Cu make the search for alternative solutions necessary. The most interesting of these are prebiotics, probiotics, enzymes, acidifiers and plant extracts. A supplementary strategy to the alternatives mentioned above is the use of flavouring substances to increase voluntary feed intake by attraction and appetite.

It is known that it is possible to increase voluntary feed intake by incorporating sensory additives in feedstuffs that increase appetite. Patent US4125629 describes a flavouring composition to be mixed with piglet feedstuffs consisting in aldehydes, alcohols, esters and terpenes. Patent US5906842 describes a composition that stimulates appetite in dairy cows, comprising a preparation of corn, lysine and methionine. Patent US6592924 describes flavouring combinations comprising alkylphenols and cyclohexanecarboxylic acids or their alkyl-substituted derivatives that can be added to feedstuffs for pets. Patent application EP174821 describes flavouring compositions to improve its acceptability to livestock, comprising n-hexanal, cis-3-hexen-1-ol, 1-octen-3-ol and beta-ionone, amongst other components. Patent application EP951840 describes flavouring compositions for feedstuffs containing 2-acetyl-2-thiazoline and its precursors, as well as other ingredients such as alkylated thiazolidines, 2-methyl-3-furanthiol and mercaptopentanone.

**Summary of the invention**

The authors of the present invention have found that a composition comprising a Stevia extract and Neohesperidine didydrochalcone surprisingly increases feed intake in weanling animals.

Thus, in a first aspect, the present invention relates to the use of a composition comprising a *Stevia rebaudiana* extract and Neohesperidine didydrochalcone to increase feed intake in a weanling animal.

**Brief description of the Figures**

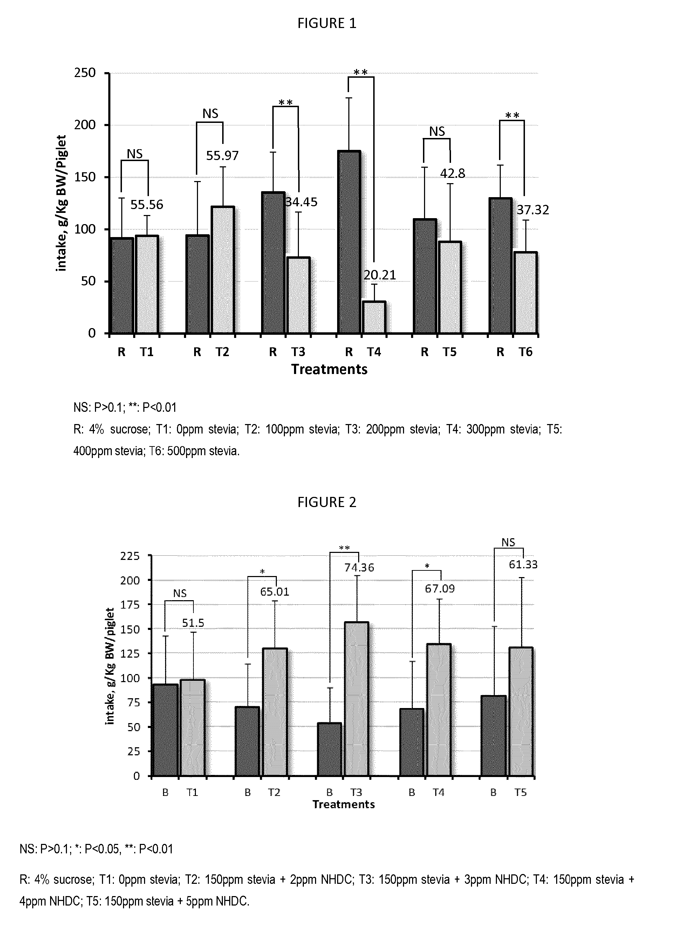

   **Figure 1.** Feed consumption corrected by number and body weight of piglets and feed preference for the different dietary treatments (T1 to T6) in Phase 1 as the % of contribution to the total feed intake (number on top of the bars), statistical comparison against the preference neutral value (50%).

   **Figure 2.** Feed consumption corrected by number and body weight of piglets and feed preference for the different dietary treatments (T1 to T5) in Phase 2 as the % of contribution to the total feed intake (number on top of the bars), statistical comparison against the preference neutral value (50%).

**Detailed description of the invention**

As mentioned above, the authors of the present invention have found that a composition comprising a *Stevia rebaudiana* extract and Neohesperidine didydrochalcone (NHDC) surprisingly increases feed intake in a weanling animal. Thus, in a first aspect, the invention relates to the use of a composition, referred herein as composition of the invention, comprising a *Stevia rebaudiana* extract and Neohesperidine didydrochalcone (NHDC) to increase feed intake in a weanling animal.

*Stevia rebaudiana* (Bertoni) is a perennial herb from the Asteraceae family. *The term "Stevia rebaudiana extract"*

as used herein refers to a Stevia plant extract which can be purchased, i.e. which is commercially available, or that can be obtained by the skilled person in the art by using well known techniques in the art. Stevia leaf extracts can be purchased in a powder form, as tablets, as syrup, etc. Thus, as an illustrative non limiting example, Stevia extracts are obtained from the leaves of the stevia plant by traditional water/alcohol extraction methods. Said methods do not alter the composition of the plant's sweet compounds. The process involves steeping the dried leaves of the stevia plant in water, filtering and separating the liquid from the leaves and stems, and further purifying the remaining plant extract with either water or food grade alcohol. As a further example, the leaves are extracted with hot water and the aqueous extract is passed through an adsorption resin to trap and concentrate the component steviol glycosides. The resin is washed with a solvent alcohol to release the glycosides and the product is recrystallized from methanol or aqueous ethanol. Ion exchange resins may be used in the purification process. The final product may be spray-dried. Dried extracts are white to slightly yellowish, crystalline, odourless to having a slight characteristic odour, water-soluble powder.

The term "weanling animal" as used herein refers to an animal that is in the process of being introduced into what it will be its adult diet and withdrawing the supply of its mother's milk. Depending on the animal, the age thereof may vary. For example, in pigs, the best overall performance of weanling pigs is achieved if pigs are weaned between 21 and 35 days of age. Pigs weaned before 21 days of age have a reduced disease resistance due to an immature immune system, poorly developed digestive functions resulting in low nutrient digestibility, low concentrations of beneficial intestinal microbes resulting in high intestinal pH that is favorable for pathogenic growth, and a higher susceptibility to stress. The terms "weanling" and "weaned" are indistinctively used herein.

In a particular embodiment of the invention, said animal is selected from the group consisting of a pig, a calf, a buffalo, a sheep, a deer, a goat, a camel, a giraffe, a horse, a cat, a dog, a rodent, and a primate. In a preferred embodiment, said animal is a pig.

As it is shown in the Examples accompanying the present invention, the composition of the invention, comprising a Stevia extract and NHDC, produce the effect of increasing feed intake in weanling animals, in particular, in piglets. Said composition is added in an amount sufficient to enhance feed intake and/or growth rate.

In a particular embodiment of the invention, the amount of *Stevia* extract in said composition is from 0,0001 % to 99,99% by wt, more particularly, the amount of *Stevia* extract in said composition is from about 60% to about 99,99% by wt. More preferably, the amount of said extract is more than 70% by wt. In another particular embodiment of the invention, the amount of NHDC in said composition is from about 0,0001% to about 10% by wt. More preferably, the amount of NHDC is about 1% to about 5% by wt.

Steviol glycosides are the secondary metabolites responsible for the sweetness of Stevia. They are synthesized by steviol glycosides biosynthesis pathway operating in the leaves. The sweetness of Stevia comes from its leaves which produce the steviol glycosides, which are the natural sweeteners of the plant. The extract of the stevia plant contains at least ten steviol glycosides in different concentrations. Said steviol glycosides are Stevioside, Steviolbioside, Rubusoside, Dulcoside A, Rebaudioside A, Rebaudioside B, Rebaudioside C, Rebaudioside D, Rebaudioside E, Rebaudioside F. These steviol glycosides differ in their molecular structure, their sweetening power and their taste. Out of those steviol glycosides, stevioside and rebaudioside A are the major metabolites.

Thus, in a particular embodiment of the invention, said *Stevia rebaudiana* extract comprises a steviol glycoside selected from the group consisting of Stevioside, Rebaudioside A, Rebaudioside B, Rebaudioside C, Rebaudioside D, Rebaudioside E, Rebaudioside F, Dulcoside A, Rubusoside, Steviolbioside or a salt thereof and mixtures thereof.

In a particular embodiment of the invention, said *Stevia rebaudiana* extract comprises a steviol glycoside in an amount of more than 30% by wt of the extract, more preferably more than 50%. In a preferred embodiment, the amount of said steviol glycoside in said *Stevia* extract is more than 70% by wt, more preferably more than 75%.

In a particular embodiment of the invention, when said extract comprises a mixture of steviol glycosides and said mixture comprises Stevioside, the amount of Stevioside in said mixture is more than 30% by wt, more preferably, more than 40% by wt of the total amount of steviol glycosides. In another particular embodiment, when said mixture comprises Rebaudioside A, the amount of Rebaudioside A in said mixture is more than 10% by wt, preferably more than 15% by wt of the total amount of steviol glycosides.

The composition of the invention can be prepared by mixing the ingredients following formulation procedures known by those skilled in the art. In a particular embodiment of the invention, the composition of the invention is formulated as a premix which is then added to feed. In order to produce a premix, the ingredients can be mixed using standard techniques well known by the skilled person in the art. As an example, the premix can be produced by gentle mixing in the feed under a minimum of dust formation and then added to the remaining feed. The ventilation inside the mixing equipment is reduced to a minimum. Additionally, a supplement can be prepared. This supplement will contain the premix and a suitable carrier. Also, the remaining minor dry ingredients in the diet including minerals, urea, and supplemental protein sources can be added. Carriers are feed ingredients which combine with the micro ingredients in the premix to alter their physical characteristics. By adsorbing to the carrier, the very fine particles of the micro ingredients are allowed to move more rapidly and uniformly through the mix.

As shown in the Examples below, the composition of the present invention, when incorporated to feed in either liquid or solid form (absorption on a solid base), increase the attraction and appetite of the feed. Thus, the compositions of the present invention can facilitate the transition from liquid feed (sow's milk) to solid feed (feedstuffs) in animal breeding, since they improve the voluntary feed intake of the animals. Thus, where appropriate, the composition of the invention can be incorporated at an effective level in a milk replacer (milk substitute) and/or in a weaning diet.

The formulation of the feed or feedstuff can be entirely conventional and it can incorporate normal amounts of standard diet ingredients, such as proteins, carbohydrates, lipids, minerals and vitamins. The physical preparation of the feed can be achieved using any conventional equipment, such as extrusion (pelletting) equipment.

Any nutritionally-appropriate combination of conventional feed ingredients can be used, e.g. grains, either whole or milled, such as barley, wheat, sorghum, maize, rice, oats and rye; cereal by-products, such as wheat feed (wheat germ), maize dark grains, barley dark grains, brewers grains, malt culms (sprouting tips from the brewing industry), maize germ, grain screenings and oat feed; residues derived from oil seeds such as rapeseed, soya, groundnut, palm kernel, sunflower, linseed, and cotton-seed; oils and fats of vegetable or animal origin; any of the miscellaneous products of plant or animal origin conventionally used in feedstuff manufacture, such as field beans, field peas, tapioca, sugarbeet pulp, potato pulp, potato protein, straw, molasses, single-cell protein, animal plasma protein and fish meal; and vitamins and mineral additives. If the feed of the invention is in the form of a milk replacer, i.e. a dry powder that can be reconstituted with water to provide a milk-like liquid, the principal components can be any of those used in conventional milk replacers. Typically, these are skimmed milk powder; fat; spray-dried whey powder; non- milk proteins such as soya protein, fish meal, single-cell protein and legume meal; minerals; vitamins; and other minor additives such as edible acids and preservatives. These components can be blended together by dry-mixing. Esters such as ethyl butyrate tend to be highly volatile.

Alternatively, the composition of the invention can be added to conventional feeds as a separate component at the time of feeding, eg. by mixing a small quantity of the composition with the conventional feed in a feeding trough.

Thus in a particular embodiment of the invention, the composition of the invention can be added to feed. In a more particular embodiment of the invention, said composition is added to feed in solid form.

When the composition of the invention is added to feed, the total amount of the *Stevia* extract in said feed is from 50 ppm to about 500 ppm. In a more particular embodiment, the total amount of the *Stevia* extract in said feed is from 100 ppm to about 300 ppm. In a preferred embodiment, the amount of Stevia extract in said feed is about 150 ppm.

In another particular embodiment, the total amount of Neohesperidine didydrochalcone in said feed is from about 1 ppm to about 10 ppm. More particularly, the total amount of Neohesperidine didydrochalcone in said feed is from about 2 ppm to about 5 ppm. In a preferred embodiment, the amount of NHDC in said feed is about 3 ppm.

The following examples are put forth so as to provide those of ordinary skill in the art with a complete disclosure and description of how to make and use the present invention, and are not intended to limit the scope of the invention or to represent that the experiments below are all or the only experiments performed. Efforts have been made to ensure accuracy with respect to numbers used (e.g., amounts, temperature, and the like), but some experimental errors and deviations may be present.

## EXAMPLES

## Material and Methods

*Experimental Animals*

A total of 432 commercial crossing piglets ([Large White x Landrace] x Pietrain) were used in 4 batches of 108 piglets each. The animals were obtained from the same commercial farm on the day of weaning and moved to the nursery unit (without transport). A total of 240 male and female 28-day-old piglets of 6-8 Kg of body weight (BW) were weaned per batch. Plastic ear tag identification with the animal's number was used.

After weaning, during the pre-starter phase (0 to 14 days post weaning) and the first two days of starter phase (14 to 16 days post weaning), piglets were allocated into 24 pens (10 piglets/pen). At day 16 post weaning, 36 from the total 240 piglets previously weaned were selected according to a homogenous BW and were re-distributed into 12 pens (3 piglets/pen) in order to start the experimental period. At the end of the experimental period those animals were removed and changed for other naïve animals to repeat the same protocol and so on until the last period.

*Experimental Products*

- Stevia extract: >75% Total Steviol Glycosides (> 40% Stevioside, >15% Rebaudioside A) from PureCircle®.
- Neohesperidine dihydrochalcone (NHDC) from INTERQUIM, S.A.

- Sucrose from AB Azucarera Iberia SLU.

Experimetnal pre-mixes to be included in the diet were also performed and provided by INTERQUIM, S.A.

- Maltodextrin from C*Dry MD 01910, Cargill, Minneapolis, US (Dextrose Equivalent (DE) to below 20)

**Table 1.** Composition of the commercial starter (∅), T1 and reference (R) diets (%)

| Ingredient (*) | ∅ | T1 | R |
|---|---|---|---|
| Maize | 27.44 | 25.44 | 25.44 |
| Soybean meal 44%CP | 8.84 | 8.84 | 8.84 |
| Barley | 21.00 | 20.00 | 20.00 |
| Extruded Soybeans | 18.00 | 18.00 | 18.00 |
| Wheat | 21.00 | 20.00 | 20.00 |
| L-Lysine-HCL | 0.47 | 0.47 | 0.47 |
| DL-Methionine | 0.20 | 0.20 | 0.20 |
| L-Threonine | 0.20 | 0.20 | 0.20 |
| L-Tryptophan | 0.06 | 0.06 | 0.06 |
| Calcium carbonate | 0.43 | 0.43 | 0.43 |
| Mono-calcium phosphate | 1.53 | 1.53 | 1.53 |
| Salt | 0.43 | 0.43 | 0.43 |
| Maltodextrin | 0.00 | 4.00 | 0.00 |
| Sucrose | 0.00 | 0.00 | 4.00 |
| Vit-Min complex | 0.40 | 0.40 | 0.40 |

(*) Antibiotics in feed: Amoxicilin:300 ppm; Colistin: 120ppm; Zinc: 2480ppm

**Table 2.** Calculated nutritive composition (% as feed basis) of the commercial starter (∅), T1 and reference (R) diets.

| Nutrients | ∅ | T1 | R |
|---|---|---|---|
| Moisture | 10.04 | 10.00 | 10.00 |
| Crude Protein | 18.9 | 18.5 | 18.5 |
| Fat | 5.42 | 5.31 | 5.31 |
| FND | 11.29 | 10.85 | 10.85 |
| Net Energy (kcal/kg) | 2439 | 2450 | 2450 |
| Lysine | 1.290 | 1.277 | 1.277 |
| Methionine | 0.460 | 0.459 | 0.459 |
| Met + Cys | 0.77 | 0.755 | 0.755 |
| Threonine | 0.86 | 0.847 | 0.847 |
| Tryptophan | 0.29 | 0.285 | 0.285 |
| Isoleucine | 1.40 | 0.743 | 0.743 |
| Valine | 0.86 | 0.842 | 0.842 |
| Calcium | 0.76 | 0.75 | 0.75 |
| Total Phosphorous | 0.80 | 0.78 | 0.78 |
| Dig. Phosphorous | 0.40 | 0.40 | 0.40 |
| Sodium | 0.18 | 0.18 | 0.18 |

*Feeding program*

During the nursery period the animals received a commercial creep feed. After weaning, animals were offered *ad libitum* commercial pre-starter diet for the first 16 days and the experimental starter diets for the next 21 days post-weaning (P1: 14 to 21 days; P2: 21 to 28 days and P3: 28 to 35 days post-weaning).

During the experimental periods P1, P2 and P3, the two experimental diets were offered following the test protocol. All diets were formulated to meet the requirements for growth of the newly weaned piglets (NRC, 2012). The specifications of the experimental diets are presented in Table 1 and 2.

Experimental diets were produced as mash and bagged and labelled, ready for dispatch to the farm.

Diets were mixed in batches of 500 or 1000 Kg (pre-starter and starter, respectively). The test articles were administered via the diet(s). In order to secure proper mixing of the feed additive, a premix were produced by very gentle mixing of the test articles in the feed under a minimum of dust formation and added to the remaining feed. The ventilation inside the mixing equipment was reduced to a minimum.

To avoid cross contamination with elements from previous productions, feed were manufactured in an appropriate rank order starting with the lower concentrations to be included in the diet and with a neutral meal mixing in between each of the diets.

Samples of all treatments in phase 1 and 2 were collected. All samples of phase 2 were sent for sweetener concentration analysis.

*Treatments and Experimental design*

A single basal premix diet (96% of the complete diet) was prepared in order to produce the reference diet (R; basal diet + 4% of sucrose) to which all of the experimental treatments were compared (basal diet + 4% of Maltodextrin + stevia extracts "on top"). For Phase 1 a total of 6 different treatments were prepared according to the increasing levels of Stevia extract in feed. For Phase 2 a total of 6 different treatments were prepared according to the increasing levels of NHDC in combination with a previously fixed level of addition of Stevia extract.

The different experimental treatments to be compared to the reference diet (R, with a 4% of sucrose) were as follows:

Table 1

| Treatments in Phase 1 | Stevia Extract (ppm) |
| --- | --- |
| Treatment 1: **T1** | 0 |
| Treatment 2: **T2** | 100 |
| Treatment 3: **T3** | 200 |
| Treatment 4: **T4** | 300 |
| Treatment 5: **T5** | 400 |
| Treatment 6: **T6** | 500 |

Table 2

| Treatment in Phase 2 | Stevia Extract (ppm) + NHDC (ppm) |
| --- | --- |
| Treatment 1: **T1** | 0 + 0 |
| Treatment 2: **T2** | 150 + 2 |
| Treatment 3: **T3** | 150 + 3 |
| Treatment 4: **T4** | 150 + 4 |
| Treatment 5: **T5** | 150 + 5 |

Each experimental period was as follows: from Friday to Sunday the selected animals were introduced to the new environment after the re-distribution and allocation (re-distributed from 10 piglets per pen to 3 piglets in each pen following a homogenous BW). Piglets were adapted to the experimental conditions by offering them the commercial starter diet ($\varnothing$) in two different mini hopper pan feeders. From Monday to Friday of the next week, the two experimental diets: the reference diet (R) and the experimental treatments T1 to T5-T6 were offered to each pen of piglets following a double-choice test (DCHT) protocol. Each experimental diet was offered in one of the two feeders, *ad libitum* feeding was ensured during the entire period. On Wednesday, the position of the feeders were changed in order to avoid side-effects and the position of the diets inside the pen, left or right, were also changed across pens. Feed disappearance from each feeder was measured.

The procedure described above was repeated for 3 times in each batch and in 2 batches for Phase 1. The same procedure was also repeated in phase 2. Each experimental period included all treatments to be tested within a phase (n=2 per treatment and period and 3 periods per phase; n=12 per treatment). The animals were naïve in front of the treatments to be tested at the start of each experimental period. At the start and at the end of each period all of the animals were weighted in order to calculate the feed intake expressed as g/kg BW/animal.

*Statistical analysis*

Standardized Feed Intake and % of preference (obtained with the Free Choice Test) were analyzed with ANOVA using the MIXED procedure of the statistical package SAS®. The statistical unit was the pen of three piglets.
The mathematical model used was:

$$Yij = \mu + \alpha i + \varepsilon ijk,$$

Where Yij is the consumption estimated of each diet; $\mu$ is the general mean of all observations; $\alpha i$ is the effect of treatment; and $\varepsilon \sim N (0, \sigma 2\varepsilon)$ was the unexplained random error.
All of the results are presented as Least Square Means taking into account Tukey adjust and the alpha level used for the determination of significance for all of the analysis was 0.05.
Additionally, the preference values for the treatments (T1 to T5-T6 in each phase) were compared to the neutral value of 50 % by using a Student's t-test procedure of the statistical package SAS®.

**RESULTS**

Results of feed preference are presented as total intake and percentage of preference. All of the results are presented as Least Square Means taking into account Tukey adjust and the alpha level (0.05) used for the determination of significance. No abnormal or clinical signs were detected in the animals during the entire experimental period.

***Phase 1***

The preference for different levels of Stevia extract over sucrose was directly compared. Results are presented as intake corrected by the number of piglets and BW (g/kg/pig) and also the percentage of preference (Table 3 and Figure 1).
Piglets in the first comparative T1 (0 ppm stevia) vs. R (4% of sucrose), showed no preference for any of the two diets. No preferences for any level of stevia extract were observed. However, piglets in the test T2 (100ppm of stevia extract) presented a higher intake over the reference diet (4% of sucrose), while piglets in test T3, T4 and T6 (200, 300 and 500ppm of stevia extract, respectively) showed lower preference values than the reference diet (P<0.01). Thus, the inclusion of 100ppm of stevia extract in the starter diets could have a positive impact on feed intake of piglets.

**Table 3.** Feed Intake and % of preference for the different direct comparisons (Choice Test) during the entire Phase 1 (n=12).

| Treatment | Intake (g/Kg BW/piglet) | P-value | Preference (%) | P-value |
|---|---|---|---|---|
| *R* | 91.90 ± 38.35 | 0.8257 | 55.56 ± 18.36 | 0.339 |
| *T1* | 94.12 ± 19.06 | | | |
| *R* | 94.6 ± 51.37 | 0.3017 | 55.97 ± 21.76 | 0.3624 |
| *T2* | **121.65 ± 38.27** | | | |
| *R* | 135.64 ± 38.31 | 0.0133 | **34.45(*) ± 17.3** | 0.0099 |
| *T3* | **73.22 ± 43.16** | | | |
| *R* | 175.11 ± 51.21 | <0.0001 | **20.21 (*) ± 14.01** | <0.0001 |
| *T4* | **30.66 ± 16.85** | | | |
| *R* | 109.82 ± 49.77 | 0.4854 | 42.8 ± 25.09 | 0.3417 |
| *T5* | 88.31 ± 55.59 | | | |

(continued)

| Treatment | Intake (g/Kg BW/piglet) | P-value | Preference (%) | P-value |
|:---:|:---:|:---:|:---:|:---:|
| **R** | 130.09 ± 31.28 | 0.0072 | | 0.0089 |
| **T6** | **78.13 ± 30.58** | | **37.32(*) ± 13.85** | |

R: 4% sucrose; T1: 0ppm stevia; T2: 100ppm stevia; T3: 200ppm stevia; T4: 300ppm stevia; T5: 400ppm stevia; T6: 500ppm stevia. Intake was corrected for weight and number of animals.

(*) Preference different from the neutral value (50%).

*Phase 2*

According to the stevia extract response in Phase 1 against sucrose, an inclusion level of stevia extract was selected (150ppm) as the basis to compare the possible synergy between stevia extract and Neohesperidine dihydrochalcone (NHDC) over the sucrose (4%) reference diet.

Results are presented as feed intake corrected by the number and BW of piglets in each pen. Additionally, the percentage of preference for stevia and NHDC compared to the reference diet is also reported in Table 4 and Figure 2.

**Table 4.** Feed Intake and % of preference for the different direct comparisons (Choice Test) during the entire Phase 2 (n=12).

| Treatment | Intake (g/Kg BW/piglet) | P-value | Preference (%) | P-value |
|:---:|:---:|:---:|:---:|:---:|
| **R** | 93.45 ± 49.65 | 0.880 | 51.5 ± 24.46 | 0.5214 |
| **T1** | 97.77 ± 49.65 | | | |
| **R** | 69.54 ± 44.58 | 0.039 | | 0.032 |
| **T2** | **130.01 ± 49.05** | | **65.01(*) ± 21.24** | |
| **R** | 53.26 ± 36.93 | 0.0008 | | 0.0008 |
| **T3** | **156.95 ± 47.53** | | **74.36(*) ± 18.37** | |
| **R** | 67.59 ± 49.15 | 0.033 | | 0.033 |
| **T4** | **134.52 ± 46.13** | | **67.09(*) ± 22.85** | |
| **R** | 81.69 ± 71.51 | 0.285 | 61.33 ± 33.6 | 0.2896 |
| **T5** | 130.61 ± 72.80 | | | |

R: 4% sucrose; T1: 0ppm stevia; T2: 150ppm stevia + 2ppm NHDC; T3: 150ppm stevia + 3ppm NHDC; T4: 150ppm stevia + 4ppm NHDC; T5: 150ppm stevia + 5ppm NHDC Intake was corrected for weight and number of animals.

(*)Preference different from the neutral value (50%).

Piglets in control test (T1 vs. R) did not show preference for any of the two diets, either T1 (0% stevia) or the R diet (4% sucrose).

Higher preference values (P<0.05) were observed in T2, T3 and T4 (150ppm stevia extract + 2, 3 and 4 ppm NHDC, respectively) than the R diet. However, no statistical differences were observed when higher NHDC inclusion levels (T5; 150ppm stevia extract + 5 ppm NHDC) were compared to the R diet (4% of sucrose).

It is concluded that the inclusion of 150ppm with 3ppm NHDC in starter diets increase feed intake and preference when it is compared to a 4% sucrose inclusion in the diet. It is shown that the inclusion of NHDC can revert the aversion for stevia extract and enhance its sweetness.

**Claims**

1.    Use of a composition comprising a *Stevia rebaudiana* extract and Neohesperidine didydrochalcone to increase feed intake in a weanling animal.

**2.** Use according to claim 1, wherein the amount of *Stevia* extract in said composition is from 0,0001 % to 99,99% by wt.

**3.** Use according to any of the preceding claims wherein the amount of *Stevia* extract in said composition is from 60% to 99,99%.

**4.** Use according to any one of the preceding claims, wherein the amount of Neohesperidine didydrochalcone in said composition is from about 0,0001% to about 10% by wt.

**5.** Use according to any one of the preceding claims, wherein said *Stevia rebaudiana* extract comprises a steviol glycoside selected from the group consisting of Stevioside, Rebaudioside A, Rebaudioside B, Rebaudioside C, Rebaudioside D, Rebaudioside E, Rebaudioside F, Dulcoside A, Rubusoside, Steviolbioside or a salt thereof and mixtures thereof.

**6.** Use according to the preceding claim wherein the amount of said steviol glycoside in said *Stevia* extract is more than 30% by wt.

**7.** Use according to claim 3, wherein the amount of said steviol glycoside in said *Stevia* extract is more than 70% by wt.

**8.** Use according to any of the preceding claims which comprises adding said composition to feed.

**9.** Use according to the preceding claim, wherein said feed is in solid form.

**10.** Use according to claims 8 to 9 wherein the total amount of the *Stevia* extract in said feed is from 50 ppm to about 500 ppm.

**11.** Use according to the preceding claim wherein the total amount of the *Stevia* extract in said feed is from 100 ppm to about 300 ppm.

**12.** Use according to claims 8 to 11, wherein the total amount of Neohesperidine didydrochalcone in said feed is from about 1 ppm to about 10 ppm.

**13.** Use according to the preceding claim, wherein the total amount of Neohesperidine didydrochalcone in said feed is from about 2 ppm to about 5 ppm.

**14.** Use according to anyone of the preceding claims wherein said animal is selected from the group consisting of a pig, a calf, a buffalo, a sheep, a deer, a goat, a camel, a giraffe, a horse, a cat, a dog, a rodent and a primate.

**15.** Use according to the preceding claim, wherein said animal is a pig.

FIGURE 1

NS: P>0.1; **: P<0.01

R: 4% sucrose; T1: 0ppm stevia; T2: 100ppm stevia; T3: 200ppm stevia; T4: 300ppm stevia; T5: 400ppm stevia; T6: 500ppm stevia.

FIGURE 2

NS: P>0.1; *: P<0.05, **: P<0.01

R: 4% sucrose; T1: 0ppm stevia; T2: 150ppm stevia + 2ppm NHDC; T3: 150ppm stevia + 3ppm NHDC; T4: 150ppm stevia + 4ppm NHDC; T5: 150ppm stevia + 5ppm NHDC.

Europäisches
Patentamt
European
Patent Office
Office européen
des brevets

**EUROPEAN SEARCH REPORT**

Application Number

EP 14 17 8169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2014/033218 A1 (PANCOSMA SA [CH]) 6 March 2014 (2014-03-06) * page 8, lines 10-11 * * page 13, paragraph 3 * * the whole document * | 1-15 | INV. A23K1/16 A23K1/18 |
| Y | SATOSHI FUJIWARA ET AL: "Sweeteners interacting with the transmembrane domain of the human sweet-taste receptor induce sweet-taste synergisms in binary mixtures", FOOD CHEMISTRY, ELSEVIER LTD, NL, vol. 130, no. 3, 19 July 2011 (2011-07-19) , pages 561-568, XP028288588, ISSN: 0308-8146, DOI: 10.1016/J.FOODCHEM.2011.07.073 [retrieved on 2011-07-31] * figure 4 * | 1-15 | |
| A | HELLEKANT G ET AL: "Taste in domestic pig, Sus scrofa", JOURNAL OF ANIMAL PHYSIOLOGY AND ANIMAL NUTRITION, BLACKWELL, BERLIN, DE, vol. 82, no. 1, 1 September 1999 (1999-09-01), pages 8-24, XP002596499, ISSN: 0931-2439 * the whole document * | 1-15 | TECHNICAL FIELDS SEARCHED (IPC) A23K |
| A | US 2010/136161 A1 (ROTH HERMANN [DE]) 3 June 2010 (2010-06-03) * examples 1-2 * | 1-15 | |
| A | US 6 251 464 B1 (FELISAZ DENIS [FR] ET AL) 26 June 2001 (2001-06-26) * the whole document * | 1-15 | |

The present search report has been drawn up for all claims

| Place of search | Date of completion of the search | Examiner |
|---|---|---|
| The Hague | 27 January 2015 | Rooney, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 17 8169

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2015

| Patent document cited in search report | | Publication date | Patent family member(s) | | Publication date |
|---|---|---|---|---|---|
| WO 2014033218 | A1 | 06-03-2014 | FR<br>WO | 2994845 A1<br>2014033218 A1 | 07-03-2014<br>06-03-2014 |
| US 2010136161 | A1 | 03-06-2010 | AT<br>AT<br>CA<br>DK<br>EP<br>ES<br>HK<br>US<br>WO | 493036 T<br>504489 A4<br>2683573 A1<br>2131670 T3<br>2131670 A1<br>2358632 T3<br>1139841 A1<br>2010136161 A1<br>2008125166 A1 | 15-01-2011<br>15-06-2008<br>23-10-2008<br>11-04-2011<br>16-12-2009<br>12-05-2011<br>29-04-2011<br>03-06-2010<br>23-10-2008 |
| US 6251464 | B1 | 26-06-2001 | AT<br>AU<br>CA<br>DE<br>DE<br>EP<br>ES<br>HK<br>JP<br>PL<br>TW<br>US<br>WO | 228774 T<br>6316596 A<br>2261096 A1<br>69625247 D1<br>69625247 T2<br>0929233 A1<br>2121566 T3<br>1023266 A1<br>2001507209 A<br>331245 A1<br>529914 B<br>6251464 B1<br>9803082 A1 | 15-12-2002<br>10-02-1998<br>29-01-1998<br>16-01-2003<br>14-08-2003<br>21-07-1999<br>16-07-2003<br>25-07-2003<br>05-06-2001<br>05-07-1999<br>01-05-2003<br>26-06-2001<br>29-01-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4125629 A
- US 5906842 A
- US 6592924 B
- EP 174821 A
- EP 951840 A